# EUROPÄISCHE PATENTSCHRIFT

(11) **EP 0 415 906 B1**
(45) Veröffentlichungstag und Bekanntmachung des Hinweises auf die Patenterteilung: **10.02.1993**
(21) Anmeldenummer: 90890241.4
(22) Anmeldetag: 09.08.1990
(51) Int. Cl.: G01P 3/36, F41G 3/12

(54) **Verfahren und Einrichtung zur Bestimmung von Bewegungskenngrössen**
Method and device for the determination of parameters of motion
Procédé et dispositif pour la détermination de paramètres de mouvement

(30) Priorität: 28.08.1989 AT 2026/89
(43) Veröffentlichungstag der Anmeldung: 06.03.1991
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Zagar, Bernhard, Dipl.-Ing. Dr., A 8010 Graz (AT); Boschanig, Reinhard, A 8053 Graz (AT)
(74) Vertreter: Pinter, Rudolf, Dipl.-Ing.

(56) Entgegenhaltungen:
- DE-A- 2 717 949
- DE-A- 3 404 953
- GB-A- 2 200 215

## Beschreibung

Die Erfindung betrifft ein Verfahren und eine Einrichtung zur Bestimmung von Bewegungskenngrößen eines sich relativ zu einem Meßaufbau bewegenden Objektes, insbesonders eines sich in einem Waffenrohr bewegenden Geschoßes, wobei eine vom Meßaufbau aus auf das Objekt gerichtete elektromagnetische Welle mit der vom Objekt reflektierten Welle überlagert wird, in dem durch ein elektrisches Meßsignal repräsentierten zeitlichen Verlauf des Phasenunterschiedes zwischen hin- und rücklaufender Welle einzelnen Amplitudenwerten der zugehörige Phasenunterschied und damit der jeweilige Ort des Objektes zugeordnet wird, und durch Differentiation dieses Phasenunterschiedes nach der Zeit die jeweiligen Bewegungskenngrößen bestimmt werden. Die entsprechende Einrichtung weist einen Generator zur Erzeugung einer elektromagnetischen Welle, eine damit in Verbindung stehende Koppelanordnung zur Einkoppelung der elektromagnetischen Welle in das Waffenrohr, eine Mischstufe zur Überlagerung eines Teiles der eingekoppelten mit der vom Geschoß reflektierten Welle, einen Transientenrecorder zur Aufzeichnung des den zeitlichen Verlauf des Phasenunterschiedes zwischen hin- und rücklaufender Welle repräsentierenden elektrischen Meßsignals und eine Auswerteeinrichtung für dieses Meßsignal auf.

Verfahren und Einrichtungen der genannten Art eignen sich hervorragend zur berührungslosen Messung des Verlaufes von Geschwindigkeit und Beschleunigung an sich beliebiger, bewegter Objekte, haben aber in jüngster Zeit vorwiegend im Zusammenhang mit der sogenannten Innenballistik von Rohrwaffen Bedeutung erlangt. Von zentraler Bedeutung in der Innenballistik ist neben dem Gasdruck die durch den Geschoßbodendruck hervorgerufene translatorische Geschoßbewegung im Waffenrohr, also Weg, Geschwindigkeit und Beschleunigung des Geschoßes. Mit handelsüblichen Mikrowellen-Interferometern werden heute Verfahren der genannten Art im Kaliberbereich von etwa 5 bis 600 mm durchgeführt.

So ist beispielsweise der US-PS 2.691.761, US-PS 2.735.981, bzw. auch der US-PS 2.824.284 jeweils ein Verfahren bzw. eine Einrichtung der genannten Art als bekannt zu entnehmen, wobei in allen Fällen zur Auswertung des den zeitlichen Verlauf des Phasenunterschiedes zwischen hin- und rücklaufender Welle repräsentierenden elektrischen Meßsignales jeweils der Abstand benachbarter Maxima bzw. Minima des aufgezeichneten Interferometersignals ausgemessen und zur weiteren Verarbeitung herangezogen wird. Da unter der Voraussetzung, daß keine störenden Einflüsse durch Verbrennungsgase, die durch Undichtheiten vor das Geschoß gedrückt werden könnten, auftreten, die örtliche Frequenz der Dopplerverschiebung direkt proportional der Geschoßgeschwindigkeit am jeweiligen Ort ist, kann nun einerseits über die bekannte Ausbreitungswellenlänge der verwendeten elektromagnetischen Welle im Waffenrohr eine Zuordnung des Auftretens dieser Maxima bzw. Minima zu diskreten Orten entlang der Länge des Waffenrohres erfolgen und andererseits an diesen Orten durch Bildung des Differenzquotienten einer den ausgemessenen zeitlichen Abständen proportionalen Größe jeweils einem Ort eine bestimmte Geschwindigkeit zugewiesen werden.

Man erhält dabei aus der eigentlichen Messung direkt nur punktweise Ergebnisse zu diskreten Zeitpunkten, was bedeutet, daß es eigentlich keinen stetigen, differenzierbaren Signalverlauf gibt. Man kann zwar zwischen den einzelnen Extremwerten jeweils mittlere Geschwindigkeiten annehmen, die sich aber an den Extremwerten selbst dann sprungartig ändern. Eine unmittelbare Mittelung über die so erhaltenen diskreten Geschwindigkeitswerte führt zu in den meisten Fällen nicht tolerierbaren Fehlern, da die Geschwindigkeit zwar linear vom Weg jedoch hyperbolisch von der Zeit abhängt (Geschwindigkeit v = Weg s/Zeit t - eine Mittelung über die Zeit erfolgt damit im Nenner des Bruches). Weiters ergeben sich naturgemäß große Fehler durch das Ausmessen der Extremwertabstände selbst, da bei zeitdiskreten Systemen nicht garantiert werden kann, daß die tatsächlichen Extremwerte auch abgetastet werden und sich damit jeder Quantisierungsfehler unmittelbar auswirkt und zusätzliche, praktisch nicht korrigierbare Fehler im von der Messung gelieferten Ergebnis bedingt.

Als zweite, etwas elegantere Methode zur Ermittlung der Ortsfrequenz und damit von diskreten Geschwindigkeits- bzw. Beschleunigungswerten zu einer bestimmten Zeit bzw. an einem bestimmten Ort im Waffenrohr bietet sich die Kurzzeit Fourier-Transformation an, welche zwar bereits alle aufgezeichneten Amplitudenwerte des Interferometersignals berücksichtigt und damit über die in der Messung selbst unvermeidlichen Quantisierungs- und Phasenfehler mittelt, jedoch weitere in der Natur des Verfahrens selbst begründete Nachteile hat. Ähnlich wie bei der Unschärferelation allgemein ausgedrückt stößt man dabei auf das Problem, daß das Meßzeit-Frequenzbandbreiteprodukt eine konstante Größe ist; will man also die Dopplerfrequenz und damit die Geschoßgeschwindigkeit sehr genau ermitteln, muß die Meßzeit groß gewählt werden, was sich jedoch aufgrund der hoch-transienten Vorgänge verbietet.

Aufgabe der vorliegenden Erfindung ist es, die angeführten Nachteile der bekannten Verfahren, bzw. der bekannten Einrichtungen zur Durchführung dieser Verfahren, zu vermeiden und insbesonders ein Verfahren und eine Einrichtung zur Bestimmung von Bewegungskenngrößen eines sich relativ zu einem Meßaufbau bewegenden Objektes so auszubilden, daß mit einfachen Mitteln und einfach und rasch auszuführenden Verfahrensschritten die ortsabhängige Geschwindigkeit bzw. Beschleunigung des Objektes innerhalb enger Fehlergrenzen bestimmbar ist.

Dies wird nach dem erfindungsgemäßen Verfahren dadurch erreicht, daß zur Ermittlung des stetigen Verlaufes der ortsabhängigen Geschwindigkeit und Beschleunigung des Objektes vorerst im Meßsignal jedem aufgezeichneten Amplitudenwert der zugehörige kumulative Phasenunterschied und damit der jeweilige Ort des Objektes zugeordnet wird, daß durch die arcuscosinustransformierten Abtastpunkte des punktweise aufgezeichneten Meßsignals eine analytische, mindestens dreimal stetig differenzierbare Ausgleichsfunktion, vorzugsweise Tschebyscheff-Funktion, gelegt wird und daß dann die ortsabhängige Geschwindigkeit bzw. Beschleunigung des Objektes durch ein- bzw. zweimalige Differentiation des Ortes nach der Zeit ermittelt wird. Es wird nun also jedem aufgezeichneten Amplitudenwert des Interferometersignals über die bekannte Wellenlänge der verwendeten elektromagnetischen Welle (im Meßbereich, also etwa im Waffenrohr) der zugehörige Phasenunterschied und damit der jeweilige Ort des Objektes zugeordnet. Nach Arcuscosinus-Transformation (möglich ist hier natürlich auch eine Arcussinus-Transformation, soferne anstelle der Extremwerte jeweils die Nulldurchgänge für Beginn und Ende eines Zyklus herangezogen werden) zur phasen- und damit ortsrichtigen Zuordnung der unterschiedlichen Amplitudenwerte wird durch die transformierten Abtastpunkte eine Ausgleichsfunktion gelegt, was defakto einer Mittelung über etwaige Quantisierungs- und Phasenfehler ohne Beeinträchtigung der angestrebten Ortsauflösung und zu einer genauen, analytischen Beschreibung des zeitabhängigen Weges führt. Die damit erhaltene Zeitabhängigkeit des Geschoßortes kann einfach und stetig differenziert werden und ergibt nach einmaliger Differentiation die ortsabhängige Geschoßgeschwindigkeit und nach weiterer Differentiation die ortsabhängige Beschleunigung des Geschoßes.

Es ist mit dem erfindungsgemäßen Verfahren also möglich, einem bestimmten Ort entlang des Waffenrohres eine bestimmte Geschoßgeschwindigkeit und -beschleunigung zuzuordnen, ohne daß sich diese Zuordnungsmöglichkeit auf einzelne Extremwerte beschränkt oder aber mit der im Zusammenhang mit der Kurzzeit Fourieranalyse erwähnten prinzipiellen Unschärfe behaftet ist. Darüber hinaus kann mit diesem Verfahren erstmalig die Geschwindigkeit und auch die Beschleunigung im Bereich vor dem Auftreten des ersten Minimums bzw. Maximums im Interferometersignal, also in einem Bereich, der mit den oben erwähnten bekannten Verfahren und Einrichtungen einer Analyse überhaupt nicht zugänglich war, ermittelt werden.

Eine Einrichtung der eingangs genannten Art ist gemäß der Erfindung so ausgebildet, daß die Auswerteeinrichtung eine Zuordnungseinheit, welche im Meßsignal jedem zeitabhängig aufgezeichneten Amplitudenwert den zugehörigen Phasenunterschied und damit den jeweiligen Geschoßort zuordnet, eine damit in Verbindung stehende Ausgleichseinheit, welche durch die arcuscosinus-transformierten Abtastpunkte des punktweise aufgezeichneten Meßsignals eine analytische, mindestens dreimal stetig differenzierbare Ausgleichsfunktion, vorzugsweise Tschebyscheff-Funktion, legt sowie eine damit in Verbindung stehende Differentiationseinheit zur ein- bzw. zweimaligen Differentiation des Phasenunterschiedes nach der Zeit aufweist. Die konkrete Ausführung der beschriebenen, erfindungsgemäß zusammenwirkenden Teile der Auswerteeinrichtung ist hier nicht weiter von Belang und kann dem einschlägigen Fachmann überlassen bleiben. Beispielsweise können dabei die Zuordnungseinheit und/oder Ausgleichseinheit und/oder Differentiationseinheit zumindest teilweise softwaremäßig realisiert sein, was auch einen einfachen Aufbau der erfindungsgemäßen Einrichtung mit je für sich bekannten, handelsüblichen Elementen ermöglicht.

Gemäß einer weiteren Ausgestaltung des erfindungsgemäßen Verfahrens ist vorgesehen, daß zum Ausgleich von Amplitudenschwankungen der auf das Objekt gerichteten Welle die Amplitude der niederfrequenten Schwingung zwischen zwei Extremwerten im aufgezeichneten Meßsignal durch Spline-Interpolation, vorzugsweise kubische Spline-Interpolation, ermittelt wird. Diese Weiterbildung ist insbesonders dann von Bedeutung, wenn die Amplitudenregelung des die verwendete elektromagnetische Welle erzeugenden Generators nicht die erforderliche Genauigkeit aufweist. Eine relativ gute Amplitudenregelung wird hier deshalb vorausgesetzt, da ja theoretisch vom Meßprinzip her nicht unterschieden werden kann zwischen einer Reflexion am ruhenden Objekt mit sinusartiger Modulierung der einlaufenden elektromagnetischen Welle einerseits und einem entsprechend bewegten Objekt mit einer konstante Amplitude aufweisenden elektromagnetischen Welle. Als Grenze für eine ausreichend gute Amplitudenregelung - welche die genannte Interpolation entbehrlich macht - ist hier der Bereich anzusehen, in dem eventuelle Amplitudenschwankungen kleinere Fehler bedingen als durch die Quantisierungseffekte eines Transientenrecorders oder dergleichen ausgelöst; dies erlaubt Amplitudenfehler im Promillbereich.

Nach einer weiteren Ausgestaltung des erfindungsgemäßen Verfahrens wird die Anfangsphasenlage bereits vor dem Schuß aus einer längeren Mittelung des Meßsignals ermittelt, da gerade die exakte Kenntnis der Ausgangslage des Geschosses einen großen Einfluß auf den Meßfehler des Verfahrens hat. Da der Phasenunterschied und damit der jeweilige Geschoßort durch die genannte Ausgleichsfunktion analytisch approximiert wird, kommt es bei der Auswertung zu Abweichungen zwischen der tatsächlichen, von Störungen, die ja gerade ausgeglichen werden sollen, überlagerten Phase und der durch die Ausgleichsfunktion bestimmten Phase. Es ist daher anzustreben, die Anfangsphasenlage - wie erwähnt - noch vor dem Schuß durch längere Mittelungszeit des Mischersignals zu ermitteln.

Mit dem erfindungsgemäßen Verfahren bzw. der beschriebenen Einrichtung sind untere Fehlergrenzen für die Geschwindigkeitsermittelung erreichbar, die im Bereich des Beschleunigungsmaximums bei etwa 5 % und im Bereich der Endgeschwindigkeit unter 1 % liegen.

Die Erfindung wird im folgenden noch anhand der schematischen Zeichnungen näher erläutert.
Fig. 1 zeigt dabei eine schematische Darstellung einer erfindungsgemäßen Einrichtung zur Bestimmung von Bewegungskenngrößen eines sich in einem Waffenrohr bewegenden Geschoßes,
Fig. 2 ein typisches Beispiel für ein bei einer Messung mit der in Fig. 1 dargestellten Einrichtung aufgezeichnetes Interferometersignal (Spannung U über der Zeit t),
Fig. 3 ein Geschwindigkeits/Weg-Diagramm als Ergebnis des erfindungsgemäßen Verfahrens - ausgehend von einem Signalverlauf gemäß Fig. 2,
Fig. 4 das entsprechende Beschleunigungs/Weg-Diagramm, und
Fig. 5 einen etwas verdeutlichten Signalverlauf entsprechend Fig. 2.

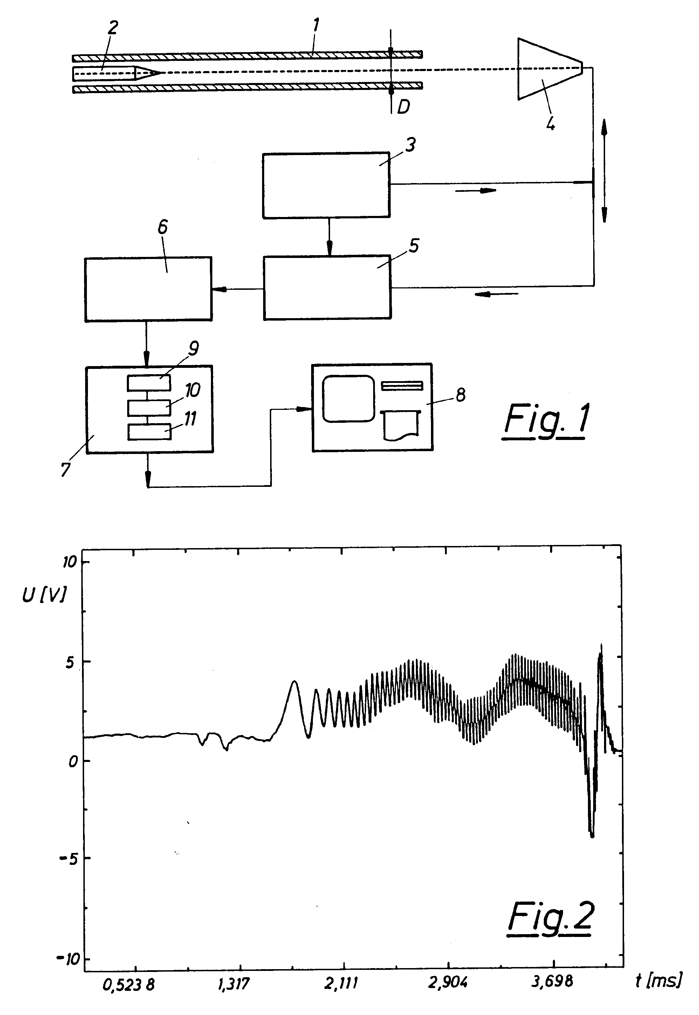

Die Einrichtung nach Fig. 1 dient zur Bestimmung von Bewegungskenngrößen eines sich in einem Waffenrohr 1 bewegenden Geschoßes 2 und weist einen Generator 3 zur Erzeugung einer elektromagnetischen Welle, eine damit in Verbindung stehende Koppelanordnung 4 zur Einkoppelung der elektromagnetischen Welle in das Waffenrohr 1, eine Mischstufe 5 zur Überlagerung eines Teiles der eingekoppelten mit der vom Geschoß 2 reflektierten Welle, einen Transientenrecorder 6 zur Aufzeichnung des den zeitlichen Verlauf des Phasenunterschiedes zwischen hin- und rücklaufender Welle repräsentierenden elektrischen Meßsignals, und eine Auswerteeinrichtung 7 für dieses Meßsignal, auf. Weiters ist noch eine angeschlossene Einheit 8 zur Dokumentation bzw. Anzeige der Ergebnisse angeschlossen. Die Auswerteeinrichtung 7 weist eine Zuordnungseinheit 9, welche im Meßsignal jedem zeitabhängig aufgezeichneten Amplitudenwert den zugehörigen Phasenunterschied und damit den jeweiligen Geschoßort zuordnet, eine damit in Verbindung stehende Ausgleichseinheit 10, welche durch die arcuscosinus-transformierten Abtastpunkte des punktweise aufgezeichneten Meßsignals eine analytische, mindestens dreimal stetig differenzierbare Ausgleichsfunktion, beispielsweise eine Tschebyscheff-Funktion, legt, sowie eine damit in Verbindung stehende Differentiationseinheit 11 zur ein- bzw. zweimaligen Differentiation des Phasenunterschiedes nach der Zeit, auf.

Da die Auflösung des Weges des Geschoßes 2 durch das Meßverfahren proportional der Wellenlänge der verwendeten elektromagnetischen Welle (im Mikrowellenbereich) ist, wird zumeist die für die Anzündvorgänge wichtige Anfangsphase der Geschoßbewegung feiner (etwa um einen Faktor 50) aufgelöst als die darauffolgende Antriebsbewegung bis zur Rohrmündung. Aus diesem Grunde werden zumeist bei derartigen Einrichtungen zwei unterschiedliche Wellenlängen benützt - beispielsweise 55 GHz mit einer Freiraumwellenlänge von 5,5 mm für die Anfangsphase und eine an das Rohrkaliber D angepaßte zweite Frequenz, die stets eine Wellenlänge von ungefähr zwei Kalibern im Waffenrohr erzwingt; diese zweite Frequenz kann beispielsweise für ein Kaliber von 120 mm 1,9 GHz betragen.

Anstelle der in Fig. 1 dargestellten Einkoppelung bzw. Auskoppelung der elektromagnetischen Welle in das bzw. aus dem Waffenrohr 1 über die als Hornstrahler ausgebildete Koppelanordnung 4 könnte natürlich auch eine andere geeignete Koppelanordnung verwendet werden - beispielsweise eine seitliche Einkoppelöffnung im Mündungsbereich des Waffenrohres 1, womit die Koppelanordnung 4 entgegen der Darstellung in Fig. 1 nicht nach jedem Schuß erneuert zu werden braucht.

Fig. 2 zeigt nun den Signalverlauf U über t, wie er beispielsweise im Transientenrecorder 6 gemäß Fig. 1 registriert wird. Die verwendete Mikrowellenfrequenz beträgt hier 10 GHz, wobei sich eine Wellenlänge im Inneren des Waffenrohres 1 von 47,9 mm ausbildet. Die gesamte Rohrlänge betrug im aufgezeichneten Beispiel 1585 mm, sodaß sich etwa 67 Minima und Maxima aufgrund der Geschoßbewegung durch das Waffenrohr ausbilden. Die links vor der ersten sinusähnlichen Schwingung erkennbaren, nach unten gerichteten beiden Zacken dürften bei der Einpressung des Geschoßes in die Züge und Felder des Waffenrohres zustande kommen.

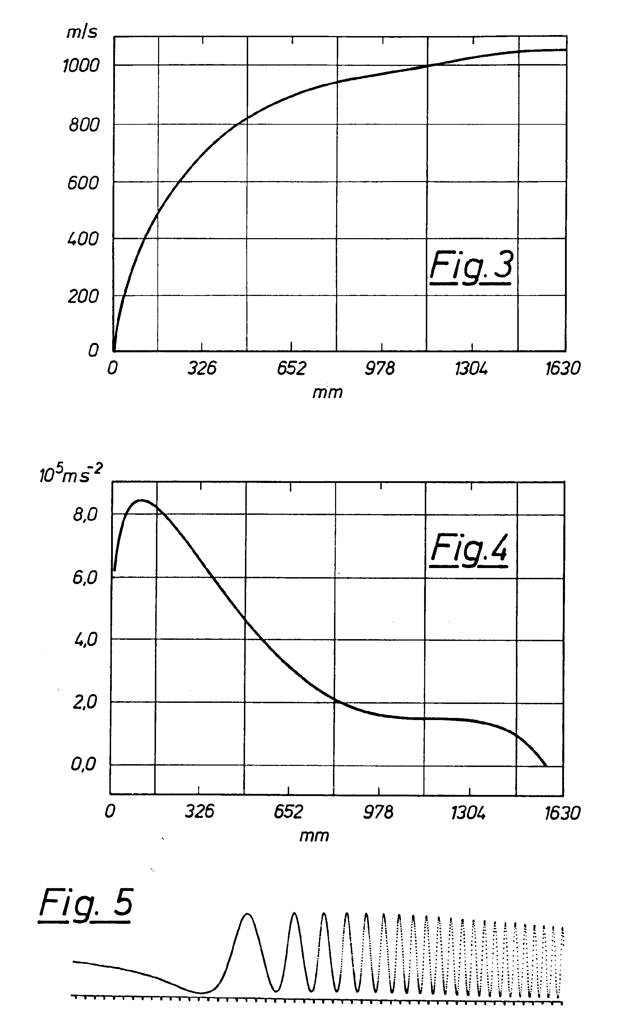

Die eigentlich im Transientenrecorder 6 aufgezeichneten Daten weisen hier eine Länge von 4096 Zeilen auf, wobei jede Zeile die Zeitinformation und den jeweiligen Abtastwert (beispielsweise in ASCII-Darstellung) beinhaltet. Das aufgenommene, den zeitlichen Verlauf des Phasenunterschiedes zwischen hin- und rücklaufender Welle repräsentierende elektrische Meßsignal gemäß Fig. 2 besteht also eigentlich aus einzelnen diskreten Meßpunkten, die für sich mit Fehlern aus der Quantisierung bzw. auch mit sonstigen Fehlern behaftet sind. Im etwas einfacheren bzw. idealisierten Meßsignal-Verlauf gemäß Fig. 5 sind diese einzelnen Punkte insbesonders im rechten Bereich der Darstellung bei den höheren Geschwindigkeiten zu erkennen.

Eine Arcuscosinus-Transformation in Verbindung mit der zum Ausgleich von Amplitudenschwankungen angewandten Spline-Interpolation der relevanten Teile des Signals gemäß Fig. 2 führt im wesentlichen zu einem Signalverlauf gemäß Fig. 5, wobei die Amplitude auf eins normiert ist. Nachdem, beispielsweise mittels der Zuordnungseinheit 9 in Fig. 1, jedem der Meßpunkte gemäß Fig. 5 der zugehörige Phasenunterschied und damit der jeweilige Geschoßort zugeordnet ist - bzw. auch parallel dazu - kann, beispielsweise über die Ausgleichseinheit 10 gemäß Fig. 1, durch die bereits arcuscosinus-transformierten Abtastpunkte eine analytische, mindestens dreimal stetig differenzierbare Ausgleichsfunktion, vorzugsweise eine Tschebyscheff-Funktion gelegt werden, was eine analytische Signalbeschreibung bzw. Darstellung des zeitabhängigen Geschoßortes ermöglicht. Nach einmaliger Differentiation dieses zeitabhängigen Geschoßortes erhält man die ortsabhängige Geschoßgeschwindigkeit gemäß Fig. 3 - nach weiterer Differentiation nach der Zeit die ortsabhängige Geschoßbeschleunigung gemäß Fig. 4. Sowohl Fig. 3 als auch Fig. 4 ist zu entnehmen, daß die ermittelten Bewegungskenngrößen weitgehend glatten und stetigen Verlauf haben, was genaue Aussagen über die Innenballistik ermöglicht und auch kleine diesbezügliche Fehler sicherstellt.

## Patentansprüche

1. Verfahren zur Bestimmung von Bewegungskenngrößen eines sich relativ zu einem Meßaufbau bewegenden Objektes, insbesonders eines sich in einem Waffenrohr bewegenden Geschosses, wobei eine vom Meßaufbau aus auf das Objekt gerichtete elektromagnetische Welle mit der vom Objekt reflektierten Welle überlagert wird, in dem durch ein elektrisches Meßsignal repräsentierten zeitlichen Verlauf des Phasenunterschiedes zwischen hin- und rücklaufender Welle einzelnen Amplitudenwerten der zugehörige Phasenunterschied und damit der jeweilige Ort des Objektes zugeordnet wird, und durch Differentiation dieses Phasenunterschiedes nach der Zeit die jeweiligen Bewegungskenngrößen bestimmt werden, **dadurch gekennzeichnet,** daß zur Ermittlung des stetigen Verlaufs der ortsabhängigen Geschwindigkeit und Beschleunigung des Objektes vorerst im Meßsignal jedem aufgezeichneten Amplitudenwert der zugehörige Phasenunterschied und damit der jeweilige Ort des Objektes zugeordnet wird, daß durch die arcuscosinus-transformierten Abtastpunkte des punktweise aufgezeichneten Meßsignals eine analytische, mindestens dreimal stetig differenzierbare Ausgleichsfunktion, vorzugsweise Tschebyscheff-Funktion, gelegt wird und daß dann die ortsabhängige Geschwindigkeit bzw. Beschleunigung des Objektes durch ein- bzw. zweimalige Differentiation des Ortes nach der Zeit ermittelt wird.

2. Verfahren nach Anspruch 1, dadurch gekennzeichnet, daß zum Ausgleich von Amplitudenschwankungen der auf das Objekt gerichteten Welle die Amplitude der niederfrequenten Schwingung zwischen zwei Extremwerten im aufgezeichneten Meßsignal durch Spline-Interpolation, vorzugsweise kubische Spline-Interpolation, ermittelt wird.

3. Verfahren nach Anspruch 1 oder 2 zur Messung an einem in einem Waffenrohr abgefeuerten Geschoß, dadurch gekennzeichnet, daß die Anfangsphasenlage bereits vor dem Schuß aus einer längeren Mittelung des Meßsignals ermittelt wird.

4. Einrichtung zur Bestimmung von Bewegungskenngrößen eines sich relativ zu einem Meßaufbau in einem Waffenrohr bewegenden Geschosses mit einem Generator zur Erzeugung einer elektromagnetischen Welle, einer damit in Verbindung stehenden Koppelanordnung zur Einkoppelung der elektromagnetischen Welle in das Waffenrohr, einer Mischstufe zur Überlagerung eines Teiles der eingekoppelten mit der vom Geschoß reflektierten Welle, einem Transientenrecorder zur Aufzeichnung des den zeitlichen Verlauf des Phasenunterschiedes zwischen hin- und rücklaufender Welle repräsentierenden elektrischen Meßsignals und einer Auswerteeinrichtung für dieses Meßsignal, **dadurch gekennzeichnet,** daß die Auswerteeinrichtung (7) eine Zuordnungseinheit (9), welche im Meßsignal jedem zeitabhängig aufgezeichneten Amplitudenwert den zugehörigen Phasenunterschied und damit den jeweiligen Geschoßort zuordnet, eine damit in Verbindung stehende Ausgleichseinheit (10), welche durch die arcuscosinustransformierten Abtastpunkte des punktweise aufgezeichneten Meßsignals eine analytische, mindestens dreimal stetig differenzierbare Ausgleichsfunktion, vorzugsweise Tschebyscheff-Funktion, legt, sowie eine damit in Verbindung stehende Differentiationseinheit (11) zur ein- bzw. zweimaligen Differentiation des Phasenunterschieds nach der Zeit aufweist.

## Claims

1. Method of determining the parameters of motion of an object moving relative to measuring apparatus, in particular of a projectile moving in the barrel of a weapon, wherein an electromagnetic wave directed onto the object from the measuring apparatus is superimposed by the wave reflected by the object, and wherein in the time curve, represented by an electric test signal, of the phase difference between the go and return wave, individual amplitudes are allocated to the appropriate phase difference and thus to the respective position of the object, and the respective parameters of motion are determined by differentiation of this phase difference with respect to time, characterised in that, to determine the continuous curve of the velocity and acceleration of the object with respect to position, each recorded amplitude is first allocated to the appropriate phase difference and thus to the respective position of the object in the test signal, that an analytic equaliser function, which is continuously differentiable, at least three-fold, preferably a Chebyshev function, is set by the arccos transformed scanning point of the test signal recorded point-by-point, and that the velocity or acceleration dependent on the position of the object is determined by single or double differentiation of the position with respect to time.

2. Method according to Claim 1, characterised in that, in order to equalise fluctuations in the amplitude of the wave directed onto the object, the amplitude of the low- frequency oscillation between two extreme values in the recorded test signal is determined by spline interpolation, preferably cubic spline interpolation.

3. Method according to Claim 1 or 2 for measurement on a projectile fired in a weapon barrel, characterised in that the initial phase position is determined prior to the shot from an extended averaging out of the test signal.

4. Device for the determination of the parameters of motion of a projectile moving in the barrel of a weapon relative to measuring apparatus having a means for generating and electromagnetic wave, a coupling arrangement 'connected thereto to couple the electromagnetic wave into the weapon barrel, a mixer stage to superimpose a part of the coupled wave with the wave reflected by the projectile, a transient recorder for recording the electric test signal representing the time curve of the phase difference between the go and return wave and an analyser for this test signal, characterised in that said analyser (7) has: an allocation unit (9) which allocates the appropriate phase difference and thus the respective position of the projectile in the test signal to each amplitude recorded with respect to time, an equaliser unit (10) connected thereto which sets an analytic equaliser function, which is continuously differentiable, at least three-fold, preferably a Chebyshev function, by the arccos transformed scanning point of the test signal recorded point-by-point, and also a differentiation unit (11), also connected thereto, for single and/or double differentiation of the phase difference with respect to time.

## Revendications

1. Procédé de détermination de valeurs caractéristiques d'un objet qui se déplace relativement à un montage de mesure, en particulier un projectile qui se déplace dans le canon d'une arme, une onde électromagnétique venant du montage de mesure et dirigée sur l'objet étant superposée avec l'onde réfléchie sur l'objet, dans lequel, on associe des valeurs individuelles d'amplitude d'un signal électrique de mesure qui représente l'évolution dans le temps de la différence de phase entre les ondes de départ et de retour à la différence de phase qui y correspond et, en conséquence, à la position correspondante de l'objet, et les valeurs caractéristiques respectives du mouvement sont déterminées par différentiation de cette différence de phase par rapport au temps, caractérisé en ce que, afin de fournir l'évolution permanente de la vitesse et de l'accélération de l'objet par rapport à sa position, on associe d'abord chaque valeur d'amplitude enregistrée dans le signal de mesure à la différence de phase correspondante et, en conséquence, à la position concernée de l'objet, en ce qu'une fonction d'égalisation, de préférence une fonction de Chebyshev, susceptible d'être différenciée constamment au moins trois fois, est établie sur la base des points explorés, après application de la transformation arc cosinus, du signal de mesure enregistré de façon ponctuelle et en ce qu'ensuite la vitesse ou l'accélération de l'objet en fonction de la position est obtenue au moyen d'une première ou, respectivement, une deuxième différentiation de La position par rapport au temps.

2. Procédé selon la revendication 1, caractérisé en ce qu'afin d'égaliser des oscillations d'amplitude de l'onde qui est dirigée sur l'objet, on fournit l'amplitude de l'oscillation basse fréquence entre deux valeurs extrêmes dans le signal de mesure enregistré au moyen d'une interpolation par fonction spline, de préférence par fonction spline cubique.

3. Procédé selon la revendication 1 ou 2, pour des mesures réalisées sur un projectile tiré par le canon d'une arme, caractérisé en ce que la position initiale de phase est obtenue avant le tir au moyen du calcul de la valeur moyenne prise sur une plus longue durée.

4. Dispositif de détermination des valeurs caractéristiques du mouvement d'un projectile qui se déplace relativement à un montage de mesure dans un canon d'une arme comportant un générateur d'une onde électromagnétigue, un agencement de couplage qui y est raccordé pour coupler l'onde électromagnétique dans le canon de l'arme, un étage mélangeur apte à superposer l' onde réfléchie par le projectile sur une partie de l'onde ainsi couplée, un enregistreur de phénomènes transitoires apte à enregistrer l'évolution temporelle d'un signal électrique de mesure représentatif de la différence de phase entre l'onde de départ et l'onde de retour, et un dispositif d'analyse pour ce signal de mesure, caractérisé en ce que le dispositif d'analyse (7) comprend une unité d'affectation (9) qui affecte chaque valeur d'amplitude du signal de mesure enregistré en fonction du temps à la différence de phase correspondante et, par là, à la position associée du projectile, une unité d'égalisation (10) qui y est raccordée qui détermine une fonction analytique d'égalisation, de préférence une fonction de Chebyshev, différentiable constamment au moins trois fois aux points auxquels on a appliqué une transformation arc cosinus, du signal de mesure enregistré de façon ponctuelle, ainsi qu'une unité de différentiation (11) qui y est raccordée pour faire une première ou, éventuellement, une deuxième différentiation de la différence de phase, par rapport au temps.
